# EUROPEAN PATENT APPLICATION

(11) **EP 4 840 804 A1**
(43) Date of publication of application: **18.11.2026**
(21) Application number: 26176566.3
(22) Date of filing: 05.05.2026
(51) Int. Cl.: B65H 7/14, B65H 5/06, B65H 43/08, B65H 85/00

(54) **TRANSPORTATION APPARATUS AND IMAGE FORMING APPARATUS INCLUDING TRANSPORTATION APPARATUS**

(30) Priority: 12.05.2025 JP 2025080119
(71) Applicant: KYOCERA Document Solutions Inc., Osaka-shi, Osaka 540-8585 (JP)
(72) Inventor: MATSUYAMA, Ryo, Osaka-shi, Osaka, 540-8585 (JP)
(74) Representative: Viering, Jentschura & Partner mbB Patent- und Rechtsanwälte

(57) **Abstract**

A transportation apparatus (200) includes a first transportation path (82) used to transport a recording medium (S), a reflective first light sensor (96), a control unit (90), and a facing member (21). The first light sensor includes a light emitter (E) and a light-receiving section (R), and detects the recording medium transported through the first transportation path. When an amount of light received by the light-receiving section is greater than or equal to a specified threshold, the control unit determines that the recording medium is in the first transportation path. The facing member is arranged to face the light emitter of the first light sensor. The facing member has a surface property of being less reflective or light scattering such that the amount of light received by the light-receiving section is less than the threshold when the recording medium is not in the first transportation path.

## Description

### Field

The present disclosure relates to a transportation apparatus and an image forming apparatus that includes the transportation apparatus.

### Background

A reflective light sensor that includes a light emitter and a light-receiving section is widely used in order to detect how far a sheet that is a recording medium has been transported when the sheet is transported in an image forming apparatus.

### Summary

A transportation apparatus according to an embodiment of the present disclosure includes a first transportation path used to transport a recording medium, a reflective first light sensor, a control unit, and a facing member. The first light sensor includes a light emitter and a light-receiving section, and detects the recording medium transported through the first transportation path. When an amount of light received by the light-receiving section is greater than or equal to a specified threshold, the control unit determines that the recording medium is in the first transportation path. The facing member is arranged to face the light emitter of the first light sensor. The facing member has a surface property of being less reflective or light scattering such that the amount of light received by the light-receiving section is less than the threshold when the recording medium is not in the first transportation path.

### Brief Description of Figures

Fig. 1 schematically illustrates a configuration of an image forming apparatus according to an embodiment of the present disclosure;
Fig. 2 is a schematic cross-sectional side view of a transportation apparatus according to the embodiment of the present disclosure;
Fig. 3 is a block diagram of a control system of the transportation apparatus;
Fig. 4 is a cross-sectional perspective view of a primary portion of the transportation apparatus; and
Fig. 5 is a schematic cross-sectional side view of a transportation apparatus according to another embodiment of the present disclosure.

### Detailed Description

Hereinafter, embodiments of the present disclosure will be described with reference to the drawings.

### First Embodiment

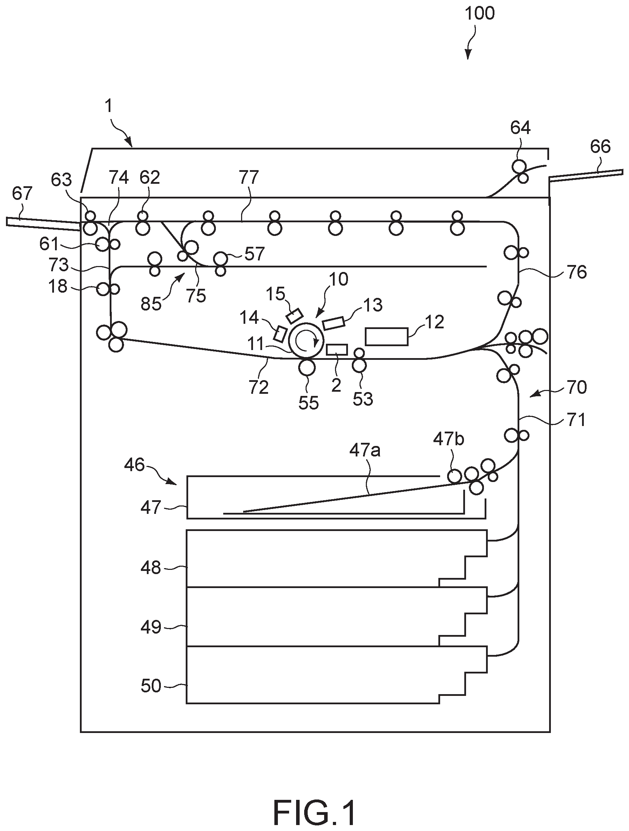

Fig. 1 schematically illustrates a configuration of an image forming apparatus 100 according to an embodiment of the present disclosure.

The image forming apparatus 100 of the present embodiment includes a rectangular-parallelepiped-shaped apparatus body 1. An image forming section 10 is provided to a substantially middle portion within the apparatus body 1.

The image forming section 10 includes a photoconductor 11 that is an image carrier, and further includes a charging section 13, an exposure unit 12, a development section 2, a transfer roller 55, a cleaning section 14, and a charge removing section 15 around the photoconductor 11 in this order in a direction of rotation of the photoconductor 11 (a direction of an arrow in the figure). Toner is supplied to the development section 2 from a toner container (not illustrated). The cleaning section 14 releases to collect toner remaining on a surface of the photoconductor 11, and the charge removing section 15 removes a residual charge from the surface of the photoconductor 11.

When the surface of the photoconductor 11 is uniformly charged by the charging section 13 with a specified polarity at a specified potential, the exposure unit 12 forms an electrostatic latent image of a document image on the photoconductor 11 on the basis of image data of a document read by a document reading apparatus (not illustrated).

The development section 2 supplies charged toner to the surface of the photoconductor 11, and develops the electrostatic latent image on the photoconductor 11 to form a toner image. The toner image is transferred by the transfer roller 55 onto a sheet that is a recording medium. After the toner image is transferred onto the sheet, the cleaning section 14 performs cleaning to collect the toner remaining on the surface of the photoconductor 11, and further the charge removing section 15 removes a residual charge from the surface of the photoconductor 11.

A sheet feeder 46 includes, for example, sheet cassettes 47 to 50. The sheet cassettes 47 to 50 are provided on the bottom of the apparatus body 1 to be vertically arranged in a line. Sheets are piled up to be accommodated in each of the sheet cassettes 47 to 50. Sheets are placed on an on-placement plate 47a of the sheet cassette 47, and the sheets on the on-placement plate 47a are fed by a pickup roller 47b one by one to a sheet transportation section 70.

The sheet transportation section 70 is used to transport a sheet in the apparatus body 1, and includes a sheet feeding transportation path 71, an image forming transportation path 72, a post-fixation transportation path 73, a branch transportation path 74, a reverse-or-discharge transportation path 77, a reverse transportation path 75, and a re-transportation path 76.

The sheet feeding transportation path 71 is a transportation path from the sheet feeder 46 to a resist roller pair 53. On the right in the apparatus body 1, the sheet feeding transportation path 71 extends upward from the sheet feeder 46 and is curved leftward on the way. The resist roller pair 53 is arranged to the right of the transfer roller 55, and feeds a sheet toward the transfer roller 55 in synchronization with a timing at which a toner image is transferred onto the sheet.

The image forming transportation path 72 is a transportation path from the resist roller pair 53 to a fixation section 18. The image forming transportation path 72 extends substantially horizontally to the apparatus body 1 and is curved upward on the way. The image forming section 10 and the fixation section 18 are arranged on the image forming transportation path 72. The image forming section 10 transfers a toner image onto a sheet, and the fixation section 18 fixes, to the sheet, the toner image transferred onto the sheet.

The post-fixation transportation path 73 is a transportation path that extends upward from the fixation section 18 to the branch transportation path 74. In the post-fixation transportation path 73, a sheet to which a toner image is fixed is transported to the branch transportation path 74.

The branch transportation path 74 is a transportation path used to transport, to the reverse-or-discharge transportation path 77 or a second discharge tray 67, a sheet to which a toner image is fixed. The branch transportation path 74 includes a transportation path that is curved rightward from a transportation roller pair 61 to extend to the reverse-or-discharge transportation path 77 via a transportation roller pair 62, a transportation path that is curved leftward from the transportation roller pair 61 and used to discharge a sheet into the second discharge tray 67 using a second discharge roller pair 63, and a transportation path that extends horizontally from the transportation roller pair 62 to the second discharge roller pair 63 and that is used to discharge, into the second discharge tray 67, a sheet in the reverse-or-discharge transportation path 77.

The reverse-or-discharge transportation path 77 is a transportation path that is used to discharge a sheet into a first discharge tray 66 or to transport a sheet reversed in order to also form a toner image on a back side of the sheet.

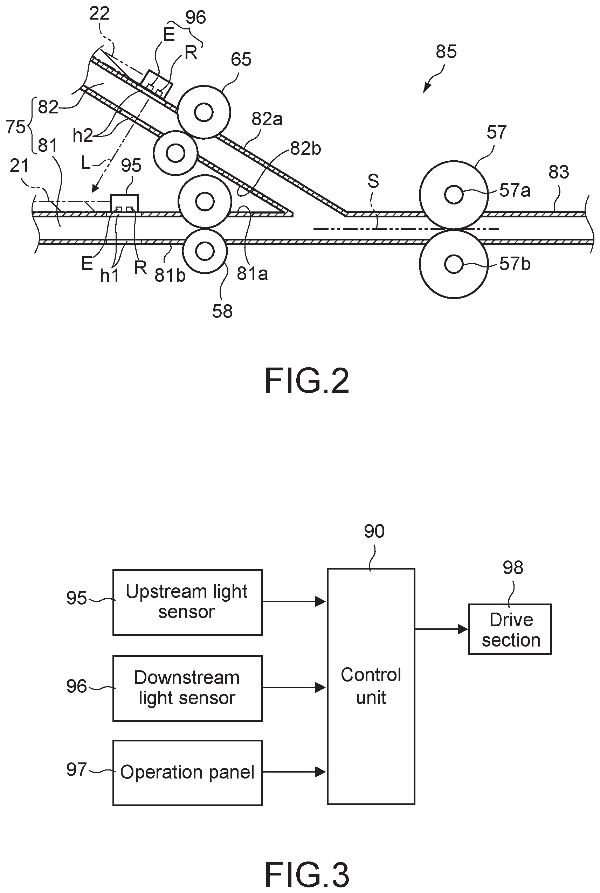

The reverse transportation path 75 is used to reverse a transportation direction for a sheet and to transport, to the reverse-or-discharge transportation path 77, the sheet for which the transportation direction has been reversed. The reverse transportation path 75 branches off from the post-fixation transportation path 73 to extend rightward to a reverse roller pair 57, and further extends upward in a U shape from the reverse roller pair 57 to join the reverse-or-discharge transportation path 77. The reverse transportation path 75 and the reverse roller pair 57 are included in a transportation reversing mechanism 85 (Fig. 2). The transportation reversing mechanism 85 will be described in detail later.

The re-transportation path 76 is used to transport the sheet reversed by the reverse transportation path 75 from the reverse-or-discharge transportation path 77 to the image forming transportation path 72, and downwardly branches off from the reverse-or-discharge transportation path 77 to join the sheet feeding transportation path 71.

A sheet supplied by the sheet feeder 46 is transported upward through the sheet feeding transportation path 71. When the sheet is further transported to the transfer roller 55 by the resist roller pair 53 in consideration of a timing of transportation, a toner image is transferred onto the sheet by the transfer roller 55. The sheet onto which the toner image has been transferred is transported to the fixation section 18 through the image forming transportation path 72. When the sheet is heated and pressurized by the fixation section 18, the toner image is fused to be fixed to the sheet. The sheet to which the toner image has been fixed passes through the post-fixation transportation path 73 and the branch transportation path 74 to be discharged into the first discharge tray 66 by the transportation roller pair 62 and a first discharge roller pair 64. Alternatively, the sheet to which the toner image has been fixed passes through the post-fixation transportation path 73 and the branch transportation path 74 to be discharged into the second discharge tray 67 by the second discharge roller pair 63.

When double-sided printing is performed, the sheet to which fixation has been performed by the fixation section 18 is transported from the post-fixation transportation path 73 to the reverse transportation path 75. After an end of the sheet passes through the reverse roller pair 57 in the reverse transportation path 75, the reverse roller pair 57 is rotated reversely at a specified timing to switch back the sheet, and the sheet is transported to the reverse-or-discharge transportation path 77 in a state in which the sheet is turned over such that another side of the sheet is to be printed. The reversed sheet is transported again from the reverse-or-discharge transportation path 77 to the sheet feeding transportation path 71 through the re-transportation path 76. The image forming section 10 transfers a toner image onto a back side of the sheet transported to the image forming transportation path 72 through the sheet feeding transportation path 71. When the fixation section 18 fuses to fix the toner image to the back side of the sheet, the sheet passes through the transportation path selected from the branch transportation path 74 to be discharged into the first discharge tray 66 or the second discharge tray 67.

Fig. 2 is a schematic cross-sectional side view of the transportation reversing mechanism 85. The transportation reversing mechanism 85 is a specific example of a transportation apparatus according to the embodiment of the present disclosure.

As illustrated in Fig. 2, the transportation reversing mechanism 85 includes the reverse transportation path 75, a midway tray 83 that temporarily accommodates therein a sheet S to be reversed (refer to Fig. 2), the reverse roller pair 57, an upstream light sensor 95 (a second light sensor), and a downstream light sensor 96 (a first light sensor), where the reverse transportation path 75 includes an incoming transportation path 81 (a second transportation path) and an outgoing transportation path 82 (a first transportation path).

The incoming transportation path 81 branches off from the post-fixation transportation path 73 (refer to Fig. 1) to be headed for the reverse roller pair 57. The incoming transportation path 81 is provided with guide plates 81a and 81b and a transportation roller pair 58. The sheet S transported from the post-fixation transportation path 73 passes through a sheet transportation space situated between the guide plates 81a and 81b, and is transported to the reverse roller pair 57 by the transportation roller pair 58.

The outgoing transportation path 82 branches off from the incoming transportation path 81 to extend toward the upper left, and joins the reverse-or-discharge transportation path 77 (refer to Fig. 1). The outgoing transportation path 82 is provided with guides 82a and 82b and a transportation roller pair 65. The sheet S reversed by the reverse roller pair 57 passes through a sheet transportation space situated between the guides 82a and 82b, and is transported to the reverse-or-discharge transportation path 77 by the transportation roller pair 65.

The reverse roller pair 57 is used to reverse (switch back) a transportation direction for the sheet S after transporting the sheet S such that the sheet S is temporarily accommodated in the midway tray 83. The reverse roller pair 57 is provided downstream of a branch point of the incoming transportation path 81 and the outgoing transportation path 82 in the transportation direction in the incoming transportation path 81. The reverse roller pair 57 includes a reverse roller 57a and a follower roller 57b. The reverse roller 57a can be rotated by a drive section 98 in both forward and reverse directions. Typically, the drive section 98 includes a motor and a drive circuit for driving the motor. The reverse roller pair 57 and the drive section 98 are included in a reverse unit according to the present disclosure.

The upstream light sensor 95 is arranged in the guide plate 81a of the incoming transportation path 81. More specifically, the upstream light sensor 95 is provided upstream of the reverse roller pair 57 in the incoming transportation path 81 used to transport the sheet S carried into the midway tray 83, and detects whether there is the sheet S transported to the reverse roller pair 57 through the incoming transportation path 81.

In particular, the upstream light sensor 95 is a reflective light sensor that is provided upstream of the transportation roller pair 58 in the incoming transportation path 81. The upstream light sensor 95 includes a light emitter E and a light-receiving section R. The light emitter E irradiates light onto the incoming transportation path 81, and the light-receiving section R receives reflected light reflected off the sheet S, which passes while blocking the irradiated light. Accordingly, the upstream light sensor 95 detects whether there is the sheet S.

The downstream light sensor 96 is arranged in the guide 82a of the outgoing transportation path 82. More specifically, the downstream light sensor 96 is provided downstream of the reverse roller pair 57 in the outgoing transportation path 82 used to transport the sheet S carried out of the midway tray 83, and detects whether there is the sheet S transported from the reverse roller pair 57 to the outgoing transportation path 82.

In particular, the downstream light sensor 96 is a reflective light sensor that is similar to the upstream light sensor 95 and provided downstream of the transportation roller pair 65 in the outgoing transportation path 82. The downstream light sensor 96 includes a light emitter E and a light-receiving section R. The light emitter E irradiates light onto the outgoing transportation path 82, and the light-receiving section R receives reflected light reflected off the sheet S, which passes while blocking the irradiated light. Accordingly, the downstream light sensor 96 detects whether there is the sheet S.

As illustrated in Fig. 3, the image forming apparatus 100 includes a control unit 90 that controls the transportation reversing mechanism 85. On the basis of, for example, detection signals provided by the upstream light sensor 95 and the downstream light sensor 96, and an input signal input through an operation panel 97, the control unit 90 controls the drive section 98 driving, for example, the transportation roller pairs 58 and 65 and the reverse roller pair 57 (the reverse roller 57a). Note that the control unit 90 may be a portion of a control apparatus that performs overall control on other sections (such as the image forming section 10, the sheet feeder 46, and the sheet transportation section 70) of the image forming apparatus 100.

The control unit 90 includes, for example, a microcomputer, a storage such as a RAM and a ROM, and a timekeeping section used to keep various kinds of time for performing control. The control unit 90 performs various calculations on the basis of programs and data that are stored in the RAM and the ROM, data input by the upstream light sensor 95 and the downstream light sensor 96, and data input through the operation panel 97. Further, the control unit 90 controls, for example, the operation panel 97 and the drive section 98. The operation panel 97 enables a user to give an instruction to start forming an image and enables the user to select, for example, various modes, the number of sheets of paper printed, and the type of paper. Further, the operation panel 97 can display thereon, for example, a mode (a printing mode such as single-sided printing or double-sided printing, or a scanning mode) selected according to the instruction given by the user, the number of sheets of paper printed, and an alert.

For example, when the control unit 90 performs a double-sided printing mode, the sheet S including a side on which an image is formed is transported to the incoming transportation path 81 by the transportation roller pair 58 and is further carried into the midway tray 83 by the reverse roller pair 57. When the upstream light sensor 95 detects the sheet S during the transportation of the sheet S in the incoming transportation path 81, the sheet S is transported to the midway tray 83 by the reverse roller pair 57. After an elapse of a specified period of time, the reverse roller pair 57 is rotated reversely, and the sheet S for which the transportation direction has been reversed is transported from the midway tray 83 to the outgoing transportation path 82. During the transportation of the reversed sheet S to the outgoing transportation path 82, the downstream light sensor 96 detects the sheet S.

The control unit 90 determines whether a sheet is in the incoming transportation path 81 and the outgoing transportation path 82 on the basis of amounts of light received by the respective light-receiving sections R included in the upstream light sensor 95 and the downstream light sensor 96. For example, the control unit 90 determines that a sheet is in the incoming transportation path 81 when the amount of light received by the light-receiving section R of the upstream light sensor 95 is greater than or equal to a specified threshold. Further, the control unit 90 determines that a sheet is in the outgoing transportation path 82 when the amount of light received by the light-receiving section R of the downstream light sensor 96 is greater than or equal to the specified threshold.

In the present embodiment, a through hole h1 is provided to portions, in the guide plates 81a and 81b of the incoming transportation path 81, that face the light emitter E and light-receiving section R included in the upstream light sensor 95. The provision of the through hole h1 prevents detection light irradiated by the light emitter E from passing through the incoming transportation path 81 and prevents reflected light reflected in the incoming transportation path 81 from reaching the light-receiving section R when no sheet is in the incoming transportation path 81. This prevents a sheet from being detected erroneously.

Likewise, a through hole h2 is provided to portions, in the guides 82a and 82b of the outgoing transportation path 82, that face the light emitter E and light-receiving section R included in the downstream light sensor 96. The provision of the through hole h2 prevents detection light irradiated by the light emitter E from passing through the outgoing transportation path 82 and prevents reflected light reflected in the outgoing transportation path 82 from reaching the light-receiving section R when no sheet is in the outgoing transportation path 82. This prevents a sheet from being detected erroneously.

However, when there is a highly light reflective member at a position at which the member faces the reflective light sensor, a sheet may be detected erroneously in a state in which there is actually no sheet, or a paper jam may be detected erroneously and printing may be stopped. In particular, when the incoming transportation path 81 and the outgoing transportation path 82 are arranged closely to each other, as in the present embodiment, detection light L (refer to Fig. 2) from the downstream light sensor 96 may pass through the through hole h2 to be reflected off the guide plate 81a of the incoming transportation path 81, and the reflected light may pass through the through hole h2 again to reach the light-receiving section R of the downstream light sensor 96. In this case, not only may the downstream light sensor 96 detect a sheet erroneously in the outgoing transportation path 82 in spite of the fact that there is no sheet, but also a paper jam in the outgoing transportation path 82 may be detected erroneously due to the state of the erroneous detection of the sheet continuing for a long time.

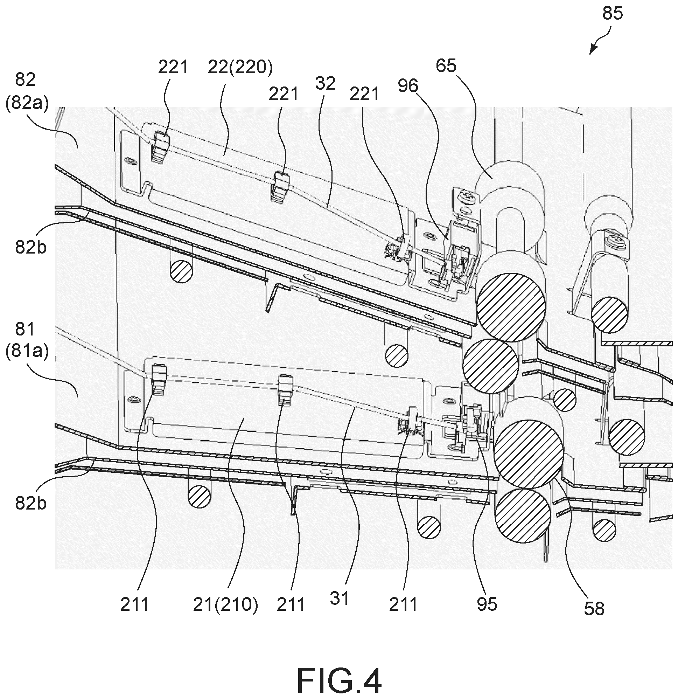

In the present embodiment, a cover member 21 is provided as a facing member to a portion that faces the light emitter E of the downstream light sensor 96, as illustrated in Figs. 2 and 4, in order to overcome the issue described above, where the cover member 21 has a surface property of being less reflective or light scattering such that the amount of light received by the light-receiving section R of the downstream light sensor 96 is less than the threshold described above.

As a result, when the sheet S is not in the outgoing transportation path 82, the detection light L emitted by the light emitter E of the downstream light sensor 96 is prevented from reaching the light-receiving section R of the downstream light sensor 96, or the amount of light received by the light-receiving section R is less than the threshold described above even if the detection light L reaches the light-receiving section R. This makes it possible to prevent a sheet from being detected erroneously in the outgoing transportation path 82.

Fig. 4 is a cross-sectional perspective view of a primary portion of the transportation reversing mechanism 85.

The cover member 21 is a press-formed body made of a metal plate or an injection-molded body made of a plastic material. At least a surface (an upper surface portion 210 of the cover member 21 in Fig. 4) that is included in the cover member 21 and off which detection light L emitted by the downstream light sensor 96 is reflected has the above-described surface property of being less reflective or light scattering. Typically, various surface processes such as black coating that enhances light absorptive properties and micromachining that enhances light-scattering properties are performed on the upper surface portion 210 of the cover member 21.

The upper surface portion 210 of the cover member 21 is a flat surface portion that supports a wiring cable 31 that connects the upstream light sensor 95 and the control unit 90. Note that the upper surface portion 210 is not limited to being flat, and may have another shape such as a curved shape. The upper surface portion 210 is provided with a plurality of fixation portions 211 used to fix the wiring cable 31. Portions of the wiring cable 31 are respectively fixed to a plurality of positions on the upper surface portion 210 of the cover member 21 using the respective fixation portions 211. The above-described routing of the wiring cable 31 on the upper surface portion 210 of the cover member 21 prevents the wiring cable 31 from being damaged due to being brought into contact with, for example, an edge portion of the cover member 21 or a member situated around the cover member 21.

Note that, as illustrated in Fig. 4, a cover member 22 that has a configuration similar to the configuration of the cover member 21 is arranged near the downstream light sensor 96 provided to the outgoing transportation path 82. An upper surface portion 220 of the cover member 22 is a flat surface portion that supports a wiring cable 32 that connects the downstream light sensor 96 and the control unit 90. The upper surface portion 220 is provided with a plurality of fixation portions 221 fixing the wiring cable 32 in a plane of the upper surface portion 220. This makes it possible to prevent the wiring cable 32 from being damaged due to being brought into contact with, for example, an edge portion of the cover member 22 or a member situated around the cover member 22.

The cover member 22 may include components having surface properties that are similar to the surface properties of the components of the cover member 21, or may include components having surface properties different from the surface properties described above. In the present embodiment, both of the cover members 21 and 22 include components in common. This prevents an increase in costs for managing and manufacturing components.

### Second Embodiment

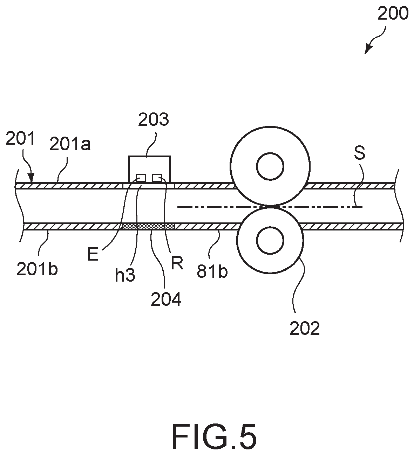

Fig. 5 is a schematic cross-sectional side view illustrating a configuration of a transportation apparatus 200 according to another embodiment of the present disclosure.

The transportation apparatus 200 according to the present embodiment includes a transportation path 201, a transportation roller pair 202, and a reflective light sensor 203. The transportation path 201 includes cover plates 201a and 201b, the transportation roller pair 202 can transport the sheet S in a certain direction (or in a direction opposite to the certain direction) in a sheet transportation space situated between the cover plates 201a and 201b, and the light sensor 203 is provided to the cover plate 201a. The light sensor 203 includes a light emitter E and a light-receiving section R, and is configured to be capable of emitting detection light onto the sheet transportation space through a through hole h3 provided to the cover plate 201a. The light sensor 203 is connected to the control unit through a wiring cable (not illustrated), and when an amount of light received by the light-receiving section R is greater than or equal to a specified threshold, the control unit determines that the sheet S is in the transportation path 201.

On the other hand, a facing member 204 is arranged in a portion of the cover plate 201b that faces the light emitter E of the light sensor 203. Various surface processes such as black coating that enhances light absorptive properties and micromachining that enhances light-scattering properties are performed on a surface of the facing member 204 that is irradiated with detection light emitted by the light sensor 203. As a result, the facing member 204 is formed to have a surface property of being less reflective or light scattering such that the amount of light received by the light-receiving section R is less than the above-described threshold when the sheet S is not in the transportation path 201 (in a portion of the transportation path 201 that faces the light sensor 203). The facing member 204 is, for example, a plate member. The facing member 204 may be a portion of the cover plate 201b, or may be a member different from the cover plate 201b.

This makes it possible to prevent the detection light emitted by the light emitter E of the light sensor 203 from reaching the light-receiving section R of the light sensor 203 when the sheet S is not in the transportation path 201 (in a portion of the transportation path 201 that faces the light sensor 203). Alternatively, this makes it possible to prevent a sheet from being detected erroneously in the transportation path 201 even when the detection light reaches the light-receiving section R, since the amount of light received by the light-receiving section R is less than the threshold described above.

Although the embodiments of the present disclosure have been described above, of course the present disclosure is not limited to the embodiments described above, and various modifications may be made thereto.

For example, an image forming apparatus that includes an electrophotographic image forming section has been described as an example in the embodiments above. Without being limited thereto, the present disclosure can also be applied to an image forming apparatus that includes an ink-jet image forming section.

Further, the example in which the present disclosure is applied to a reverse transportation path has been described in the embodiments above. However, the present disclosure can also be applied to a transportation path other than the reverse transportation path. Furthermore, the present disclosure can also be applied to a transportation mechanism included in an electronic apparatus other than the image forming apparatus 100.

It should be understood by those skilled in the art that various modifications, combinations, subcombinations and alterations may occur depending on design requirements and other factors insofar as they are within the scope of the appended claims or the equivalents thereof.

## Claims

1. A transportation apparatus (200), comprising:
a first transportation path (82) used to transport a recording medium (S);
a reflective first light sensor (96) that includes a light emitter (E) and a light-receiving section (R), the first light sensor detecting the recording medium transported through the first transportation path;
a control unit (90) that determines, when an amount of light received by the light-receiving section is greater than or equal to a specified threshold, that the recording medium is in the first transportation path; and
a facing member (21) that is arranged to face the light emitter of the first light sensor, the facing member having a surface property of being less reflective or light scattering such that the amount of light received by the light-receiving section is less than the threshold when the recording medium is not in the first transportation path.

2. The transportation apparatus according to claim 1, further comprising:
a reverse unit (57, 98) that includes a reverse roller (57a) and a follower roller (57b) that is in contact with the reverse roller to press the reverse roller, the reverse unit transporting the recording medium by the reverse roller being rotated in a certain direction, the reverse unit reversing a transportation direction for the recording medium by the reverse roller being rotated reversely in a direction opposite to the certain direction;
a second transportation path (81) used to transport the recording medium toward the reverse unit; and
a reflective second light sensor (95) that includes a light emitter (E) and a light-receiving section (R), the second light sensor detecting the recording medium transported through the second transportation path, wherein
the first transportation path is used to transport the recording medium for which the transportation direction has been reversed by the reverse unit, and
the facing member includes a flat surface portion (210) that supports a wiring cable (31) that connects the second light sensor and the control unit.

3. The transportation apparatus according to claim 2, wherein
the facing member further includes a plurality of fixation portions (211) mounted in a plane of the flat surface portion to fix the wiring cable to the flat surface portion.

4. An image forming apparatus (100), comprising
the transportation apparatus according to any one of claims 1 to 3.
